# EUROPEAN PATENT APPLICATION

(11) **EP 2 538 045 A1**
(43) Date of publication of application: **26.12.2012**
(21) Application number: 10846041.1
(22) Date of filing: 17.02.2010
(51) Int. Cl.: F01N 3/02, F01N 3/20

(54) **EXHAUST PURIFICATION DEVICE FOR AN INTERNAL COMBUSTION ENGINE**

(71) Applicant: Toyota Jidosha Kabushiki Kaisha, Aichi 471-8571 (JP)
(72) Inventor: HANADA, Shunichi, Toyota-shi Aichi 4718571 (JP); HASHIMOTO, Eiji, Toyota-shi Aichi 4718571 (JP)
(74) Representative: Winter, Brandl, Fürniss, Hübner, Röss, Kaiser, Polte - Partnerschaft
(86) International application number: PCT/JP2010/000999
(87) International publication number: WO 2011/101898

(57) **Abstract**

The present invention provides an exhaust purification device for an internal combustion engine including exhaust purification members in an exhaust passage downstream of the turbine of a turbocharger. This exhaust purification device for the internal combustion engine is provided with a heating gas supply unit (60) to supply heating gas to the exhaust purification members (30, 32, 34), a heating gas supply unit (60) including a catalyst (62) that is provided in the exhaust passage between the turbine (38) and the exhaust purification member and has an oxidative function, a fuel addition means (64) located upstream of the catalyst (62) and a heating means (66) located upstream of the catalyst (62). The fuel addition means (64) and heating means (66) are provided in a chamber (68) that communicates with the exhaust passage between the turbine (38) and the catalyst (62).

## Description

### Technical Field

The present invention relates to an exhaust purification device for an internal combustion engine to purify exhaust gas.

### Background Art

Patent Literature 1 discloses one example of an exhaust purification device for an internal combustion engine that includes an exhaust purification member for purifying exhaust gas disposed in the exhaust passage of the internal combustion engine. The device disclosed in Patent Literature 1 includes a combustion burner for recovering the exhaust purification member or raises the temperature of the exhaust purification member upstream of the exhaust purification member in the exhaust passage. This combustion burner includes an injector and an ignition to ignite misty fuel that is generated by mixing fuel jetted from the injector with air and jet flame.

### Citation List

### Patent Literature

PTL 1: Japanese Patent Laid-Open No. 2007-146700

### Summary of Invention

An internal combustion engine with a turbocharger is known and mounted in vehicles. Recently, miniaturization of such an internal combustion engine is desired from the standpoint of energy saving.

An internal combustion engine with a turbocharger generally includes an exhaust purification member to purify exhaust gas downstream of the turbocharger. Exhaust gas that passes through a turbine of the turbocharger reaches such an exhaust purification member. However, since the temperature of exhaust gas drops as it passes through the turbine, it is not easy to adequately increase the temperature of the exhaust purification member to a predetermined temperature when an engine starts.

The present invention was made in light of the above issue, and is intended to adequately heat an exhaust purification member provided in an exhaust passage of an internal combustion engine with a turbocharger.

The present invention provides an exhaust purification device for an internal combustion engine that has an exhaust purification member in the exhaust passage downstream of the turbine of a turbocharger. This exhaust purification device for the internal combustion engine is provided with a heating gas supply unit to supply heating gas to the exhaust purification member, the heating gas supply unit including a catalyst that is provided in the exhaust passage between the turbine and the exhaust purification member and has an oxidative function, a fuel addition means located upstream of the catalyst, and a heating means located upstream of the catalyst. The fuel addition means and heating means are preferably provided in a chamber that communicates with the exhaust passage between the turbine and the catalyst.

The chamber is preferably provided relative to the exhaust passage in such a way that the axis of the chamber is angled at a 30-degree or less angle relative to a plane orthogonal to the axis of the exhaust passage.

The chamber is preferably located relative to the exhaust passage in such a way that fluid in the chamber flows along the swirling flow of exhaust gas that flew out of the turbine to the exhaust passage.

It is preferable to further provide a passage to connect the chamber to the exhaust passage upstream of the turbine.

It is preferable to further provide a second fuel addition means in the turbine or in the exhaust passage upstream of the turbine. In this case, a controller to control actuation of the fuel addition means and actuation of the second fuel addition means preferably synchronizes the actuation timing of the fuel addition means and an actuation timing of the second fuel addition means so that exhaust gas containing fuel added via the second fuel addition means and fluid in the chamber merge into each other in the exhaust passage between the turbine and the catalyst.

### Brief Description of Drawings

Fig. 1 is a schematic configuration diagram illustrating an internal combustion engine system to which a first embodiment of the present invention is applied;
Fig. 2 is an enlarged schematic view illustrating part of an exhaust system of the internal combustion engine in Fig. 1;
Fig. 3 is a cross sectional view taken on line III-III of Fig. 2;
Fig. 4 is a diagram for explaining actuation of a first fuel addition valve and a second fuel addition valve illustrated in Fig. 1;
Fig. 5 is a schematic configuration diagram illustrating an internal combustion engine system to which a second embodiment of the present invention is applied; and
Fig. 6 is a diagram for explaining actuation of a control valve illustrated in Fig. 5.

### Description of Embodiments

Preferable embodiments of the present invention will be described in detail with reference to the accompanying drawings. First, the first embodiment will be described.

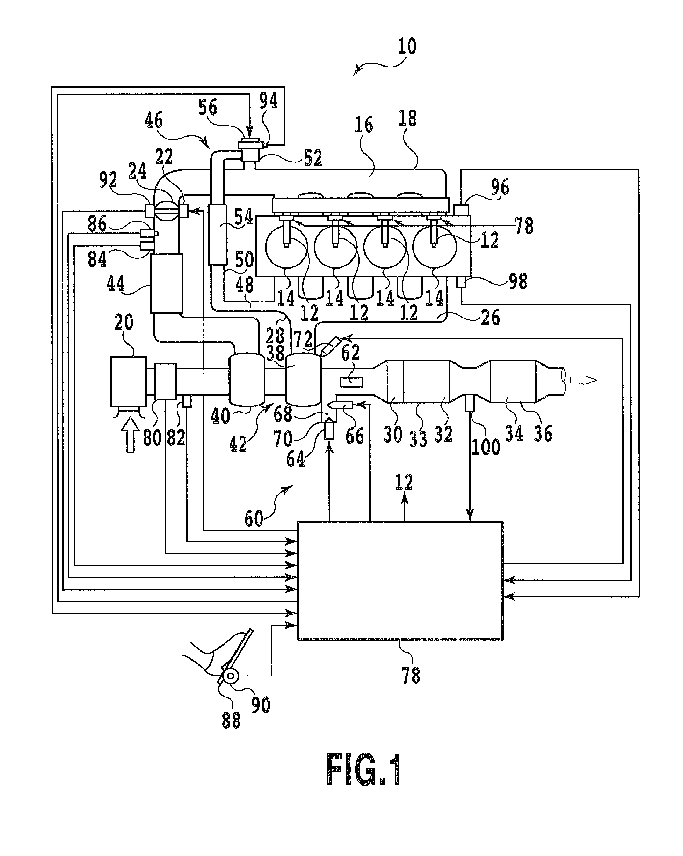

Fig. 1 is a schematic diagram of an internal combustion engine system of a vehicle to which an exhaust purification device for an internal combustion engine (hereinafter, referred to as an exhaust purification device) of the first embodiment is applied. An internal combustion engine 10 is an internal combustion engine which has a form of injecting light oil as fuel via a fuel injection valve 12 directly to a combustion chamber in a compression state thereby to spontaneously ignite, that is, a diesel engine.

An intake port that faces a combustion chamber of a cylinder 14 and defines part of an air intake passage 16 is formed in a cylinder head and is opened and closed by an air intake valve. To the cylinder head an intake manifold 18 that defines part of the intake passage 16 is connected, and upstream of the air intake manifold 18, an intake pipe that also defines part of the intake passage 16 is connected. In the upstream end side of the intake passage 16 an air cleaner 20 is provided to remove grit and dust in air to be directed to the intake passage 16. A throttle valve 24 whose opening is adjusted by a throttle actuator 22 is provided along the intake passage 16.

Meanwhile, an exhaust port that faces the combustion chamber of the cylinder 14 and defines part of an exhaust passage 26 is formed in the cylinder head and is opened and closed by an exhaust valve. To the cylinder head an exhaust manifold 28 that defines part of the exhaust passage 26 is connected, and downstream of the exhaust manifold 28, an exhaust pipe that also defines part of the exhaust passage 26 is connected. A first converter 33 is provided along the exhaust passage 26, and accommodates a first exhaust purification member (hereinafter referred to as a first purification member) 30 and a second exhaust purification member (hereinafter referred to as a second purification member) 32 in series. Further, the exhaust passage downstream of the first converter 33 is provided with a second converter 36 that accommodates a third exhaust purification member (hereinafter referred to as a third purification member) 34.

Here, the first purification member 30 is an oxidation catalyst. The first purification member 30 is composed of a monolithic catalyst in which a noble metal catalyst such as platinum Pt is supported.

The second purification member 32 is a particulate filter for trapping particulate matters (PM) in exhaust gas. The particulate filter, that is the second purification member 32, does not support a noble metal catalyst. However, the particulate filter may support a noble metal catalyst such as platinum Pt or the like.

The third purification member 34 is a catalyst to purify NOx, here, a NOx storage catalyst. In the third purification catalyst 34, a catalyst carrier composed of, e.g., alumina is supported on a substrate thereof. A noble metal catalyst such as platinum Pt or the like is dispersion-supported on the surface of the catalyst carrier and a layer of the Nox absorbent is further formed on the surface of the catalyst carrier. The NOx absorbent has a NOx absorption and release action so that the Nox absorbent occludes NOx when the air/fuel ratio of exhaust gas is lean, and the Nox absorbent releases the occluded Nox when the oxygen concentration in the exhaust decreases. Such a third purification member 34 occludes Nox when the air/fuel ratio of exhaust gas is lean, and releases the occluded Nox thereby to reduce NOx when the oxygen concentration in the exhaust decreases, e.g. the air/fuel ratio of exhaust gas is rich. The third purification member 34 may be a catalyst for purifying NOx that facilitates chemical reaction (reduction reaction) of ammonia and NOx. In this case, for example, a urea water addition device to supply ammonia can be provided between the first converter 33 and the second converter 36.

Further, a turbine 38, which includes a turbine wheel that is rotary-driven by exhaust gas, is disposed along the exhaust passage 26. The turbine 38 is disposed in the exhaust passage upstream of the first converter 33. Corresponding to the turbine 38, a compressor 40 is provided along the intake passage 16 and includes a compressor wheel that is coaxially connected to the turbine wheel and rotated by a torque of the turbine wheel. That is, the internal combustion engine 10 is provided with a turbocharger 42 including the turbine 38 that takes out exhaust energy and the compressor 40 that supercharges the internal combustion engine 10 by the exhaust energy taken out by the turbine 38. An intercooler 44 is provided in the intake passage downstream of the compressor 40 in order to cool air compressed by the compressor 40.

The internal combustion engine 10 is provided with an exhaust gas recirculation (EGR) apparatus 46 that directs part of the exhaust gas flowing in the exhaust passage 26 to the intake passage 16. The EGR apparatus 46 has an EGR pipe 50 that defines an EGR passage 48 that connects the exhaust passage 26 and the intake passage 16, an EGR valve 52 to adjust the communication state of the EGR passage 48, and an EGR cooler 54 to cool refluxed exhaust gas (EGR gas). One upstream end of the EGR pipe 50 is connected to the exhaust manifold 28, and the other downstream end of the EGR pipe 50 is connected to the intake manifold 18. The EGR valve 52 is provided downstream of the EGR cooler 54 and the opening of the EGR valve 52 is adjusted by an actuator 56.

The exhaust passage is provided with a heating gas supply unit 60. The heating gas supply unit 60 is provided so as to supply heating gas to the exhaust purification member. The heating gas supply unit 60 generates heating gas and supplies the generated heating gas to the first to third purification members 30, 32, 34, especially, the second and third purification members 32, 34 downstream thereby to maintain and facilitate warm-up or heating and active the state of these exhaust purification members.

Especially, here, the heating gas supply unit 60 is actuated so as to heat the third purification member 34 to a temperature within a predetermined temperature region. In addition, the heating gas supply unit 60 is actuated to remove PM trapped in the second purification member 32 at a predetermined time and for a predetermined amount of time. For example, every time cumulative operation time of the internal combustion engine 10 exceeds a predetermined amount of time, the heating gas supply unit 60 is actuated. The heating gas supply unit 60 can be actuated when the differential pressure between before and after the second purification member becomes a higher or predetermined pressure. In this case, a pressure sensor to detect the differential pressure between before and after the second purification member 34 may be provided.

The heating gas supply unit 60 has a pro-oxidant member 62 provided in the exhaust passage between the turbine 38 and the exhaust purification member, a fuel addition valve 64 located upstream of the pro-oxidant member 62, and a glow plug 66 located upstream of the pro-oxidant member 62. More specifically, the fuel addition valve 64, glow plug 66 and pro-oxidant member 62 are arranged in this order from the upstream side.

The pro-oxidant member 62 is a catalyst having an oxidative function, specifically an oxidation catalyst. The pro-oxidant member 62 is composed of a monolithic catalyst in which a noble metal catalyst such as platinum (Pt) is supported. The pro-oxidant member 62 has a size and shape predetermined so as not to inhibit flow of exhaust gas in the exhaust passage 26, and is supported by a support member (not shown in the figure) in the exhaust passage 26.

The fuel addition valve 64 is provided as a fuel addition means. Specifically, the fuel addition valve 64 is provided so as to add and supply fuel pumped by a pump from a fuel tank included in the fuel supply system with the fuel injection valve 12. The fuel addition valve 64, fuel tank and pump are included in the first fuel addition unit.

The glow plug 66 is configured as a heating means. The glow plug 66 can produce heat by applying an electric current. The glow plug 66 that is a heating means is included in the heating unit.

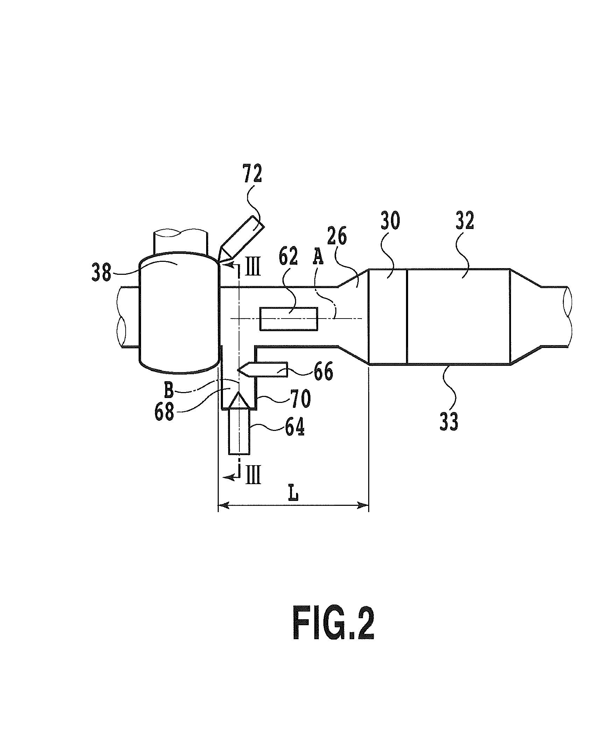

The pro-oxidant member 62 is provided in the exhaust passage between the turbine 38 of the turbocharger 42 and the first purification member 30. Meanwhile, as shown in Figs. 1 and 2, these fuel addition valve 64 and glow plug 66 are located outside the exhaust passage 26. Specifically, the fuel addition valve 64 and glow plug 66 are provided in a chamber 68 that communicates with the exhaust passage between the turbine 38 and the pro-oxidant member 62. The chamber 68 is defined by a chamber forming member 70. This chamber forming member 70 is substantially cylindrical, and closes the chamber 68 to a portion other than the exhaust passage 26. The chamber 68 is located relative to the exhaust passage 26 in such a way that the chamber 68 extends along a plane nearly orthogonal to the axis A of the exhaust passage 26. Specifically, the chamber 68 is provided relative to the exhaust passage 26 in such a way that the axis B of the chamber 68 is angled at a 30-degree or less angle (an angle greater or equal to - 30 degrees and less or equal to 30 degrees) relative to a plane orthogonal to the axis A of the exhaust passage 26. This can shorten the distance L (see Fig. 2) between the turbine 38 and the first purification member 30 that is located at the uppermost stream among the exhaust purification members. Accordingly, the arrangement contributes to miniaturization of the internal combustion engine 10 and, therefore, can supply hotter exhaust gas and the like to the exhaust purification member. In Fig. 2, the axis line A of the exhaust passage 26 is orthogonal to the axis line B of the chamber 68.

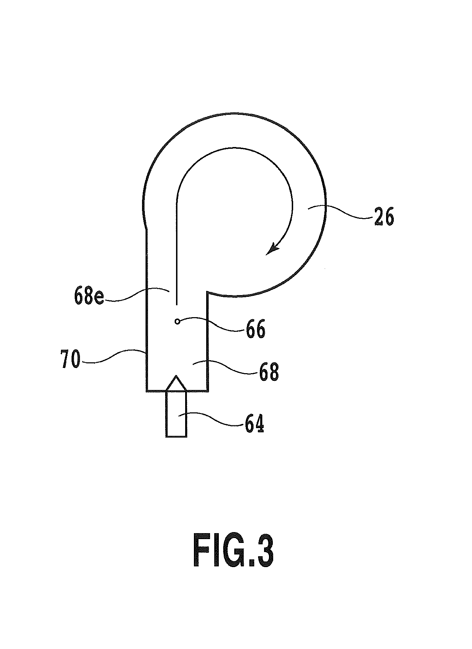

The chamber 68 is located relative to the exhaust passage 26 in such a way that fluid in the chamber 68 such as fuel and combustion gas is drawn by exhaust gas in the exhaust passage 26 and properly flows into the exhaust passage 26. The chamber 68 is located in the exhaust passage near an outlet of the turbine 38. Further, as illustrated in Fig. 3, the chamber 68 is located relative to the exhaust passage 26 in such a way that the axis of the chamber 68 faces in a tangential direction of the transverse section of the exhaust passage 26. Especially, the chamber 68 is located in the exhaust passage near an outlet of the turbine 38 in such a way that the introducing direction of fluid in the chamber 68 is the same as the swirling direction of flow of exhaust gas that flew out of the turbine 38, especially the swirling flow of the exhaust gas. Accordingly, as illustrated in Fig. 3 by the arrow, fluid in the chamber 68 can flow, along a swirling flow of exhaust gas that flew out of the turbine 38, into the exhaust passage 26. This enables the fluid that flew out of the chamber 68 to mix with exhaust gas in the exhaust passage 26 more adequately.

Further, the turbine 38 is provided with a second fuel addition valve 72 as a second fuel addition means. The second fuel addition valve 72 is included in the heating gas supply unit 60. The second fuel addition valve 72, as with the fuel addition valve (hereinafter referred to as a first fuel addition valve) 64, is provided so as to add and supply fuel pumped by a pump from a fuel tank included in the fuel supply system with the fuel injection valve 12. The second fuel addition valve 72, fuel tank and pump are included in the second fuel addition unit.

The second fuel addition unit may have a common component with the first fuel addition unit in addition to the fuel tank. For example, the pump in the second fuel addition unit can be the pump in the first fuel addition unit. Alternatively, the second fuel addition unit may be a unit completely independent from the first fuel addition unit, and may not have any common components. Each of the second fuel addition unit and first fuel addition unit can have various relationships with the fuel supply system having the fuel injection valve 12 in a like manner. The second fuel addition valve 72 may be provided in the exhaust passage upstream of the turbine 38.

The internal combustion engine 10 with such a configuration includes various sensors that electrically output signals for detecting (including estimating) various values to a controller 78. Here, some of the sensors will be specifically described. An airflow meter 80 for detecting the intake airflow amount is provided in the intake passage 16. A temperature sensor 82 to detect the temperature of intake air is provided near the airflow meter 80, and a temperature sensor 84 to detect the temperature is provided downstream of the intercooler 44. A pressure sensor 86 to detect the charging pressure is also provided along the intake passage 16. An accelerator opening sensor 90 to detect the location corresponding to pressing down of an accelerator pedal 88 that is operated by a driver, that is, an accelerator opening is provided. A throttle position sensor 92 to detect the opening of the throttle valve 26 is provided. Further, a sensor 94 to detect the opening of the EGR valve 52 is provided. A crank position sensor 96 to detect the crank rotation signal of the crank shaft to which the piston is connected via a connecting rod is mounted to a cylinder block in which a piston reciprocates. Here, this crank position sensor 96 is also used as an engine rotation speed sensor to detect the engine rotation speed. Further, a temperature sensor 98 to detect the temperature of cooling water of the internal combustion engine 10 is provided. Also, the exhaust passage 26 is provided with a temperature sensor 100 to detect the temperature of exhaust gas.

The controller 78 is composed of a microcomputer including a CPU, ROM, RAM, A/D converter, input interface, output interface and the like. To the input interface the aforementioned various sensors are electrically connected. On the basis of output signals or detection signals from these various sensors, the controller 78 electrically outputs actuation signals or driving signals from the output interface, so as to smoothly operate or actuate the internal combustion engine 10 according to a predetermined program and the like. In this way, actuation of the fuel injection valve 12, the opening of the throttle valve 24, the opening of the EGR valve 52, actuation of the first fuel addition valve 64, actuation of the second fuel addition valve 72 and actuation of the glow plug 66 (applying a current to the glow plug 66) and so on are controlled.

The heating gas supply unit 60 is provided with the first fuel addition unit, second fuel addition unit and heating unit. Part of the controller 78 has the function of a controller (a control means) in the heating gas supply unit 60. Parts of the controller 78 can function as a first fuel addition valve control means to control actuation of the first fuel addition valve 64, a second fuel addition valve control means to control actuation of the second fuel addition valve 72, and a glow plug control means to control actuation of the glow plug 66. The temperature sensor 100 and part of the controller 78 are included in a temperature detection unit to detect the temperature of the exhaust purification member. Further, part of the controller 78 can function as a cold start determination unit to determine whether it is a cold start or not. Part of the controller 78 can function as a heating determination unit to determine whether heating of the exhaust purification member is necessary or not.

In the internal combustion engine 10, a fuel injection amount (a fuel amount) and a fuel injection timing are set so as to obtain a desired output on the basis of the engine operation state indicated by the engine load and the engine rotation speed such as the intake air amount and the engine rotation speed. Then, on the basis of the fuel injection amount and fuel injection timing, the fuel injection valve 12 injects fuel.

Actuation of the heating gas supply unit 60 provided in the internal combustion engine, as described above, is also controlled by the controller 78. For example, when fuel is added and supplied via the first fuel addition valve 64 to chamber 68, electric current flows through the glow plug 66. Fuel supplied via the first fuel addition valve 64 is heated by the glow plug 66. In some cases, by heated by the glow plug 66, the fuel can be burned. Fluid such as heated fuel is drawn by the exhaust gas of the exhaust passage 26 and directed into the exhaust passage 26. Such a fluid reaches the pro-oxidant member 62 that is an oxidant catalyst and surrounding area of the pro-oxidant member 62 while the fluid is mixing with gas that exists in the exhaust passage 26. That facilitates combustion (oxidation) of the addition fuel thereby to adequately generate gas for heating the exhaust purification member.

In this way, the heating gas supply unit 60 discharges hot heating gas, which is supplied to the exhaust purification members such as the third purification member 34. Accordingly, the warm-up, heating and active state of those exhaust purification members can be maintained and facilitated. Especially, this heating gas supply unit 60 is advantageous for improving cold emission immediately after a cold start of the internal combustion engine 10.

In addition, when fuel is added and supplied via the second fuel addition valve 72, a further heating effect can be obtained. The fuel via the second fuel addition valve 72 mixes with exhaust gas while the fuel is passing through the turbine 38. Such a fuel can be burned (oxidized) while the fuel is passing through the pro-oxidant member 62 or when the fuel merges into fluid such as heated fuel or burned fuel from the chamber 68. For example, when fluid from the chamber 68 merges into exhaust gas containing fuel from the second fuel addition valve 72, the fluid works like a spark and fuel in the exhaust gas can start to burn. Since such exhaust gas further reaches the pro-oxidant member 62, the burning is properly facilitated. Accordingly, heating gas can be more adequately supplied to the exhaust purification members such as the third purification member 34, thereby maintaining and facilitating the warm-up or heating and active state of the exhaust purification members, as described above.

Especially, so as to make fuel added via the second fuel addition valve 72 in this way burn more adequately, exhaust gas containing the fuel preferably merges into fluid that was supplied and added via the first fuel addition valve 64 and that flew out of the chamber 68 in the exhaust passage. Accordingly, in the present embodiment, the controller 78 synchronizes the actuation timing of the first fuel addition valve 64 with the actuation timing of the second fuel addition valve 72 in such a way that exhaust gas containing fuel added via the second fuel addition valve 72 and fluid from the chamber 68 merge into each other in the exhaust passage between the turbine 38 and the pro-oxidant member 62. Relationships of these actuation timings, that is, fuel addition timings are previously set on the basis of experiments or the like, and stored as data for control in a storage device such as a ROM.

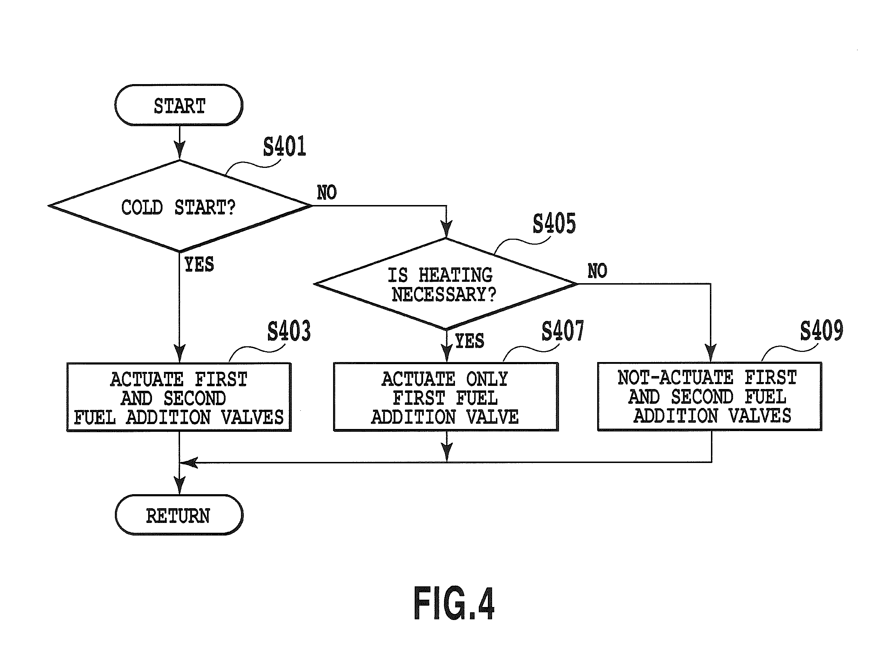

Such actuation control of the first fuel addition valve 64 and second fuel addition valve 72 will be described with reference to flowchart of Fig. 4. When the first fuel addition valve 64 is actuated, the glow plug 66 is actuated. However, the actuation of the glow plug 66 will not be described below.

First, the controller 78 determines whether it is a cold start or not (Step S401). This determination is made based on the temperature of the cooling water of the internal combustion engine 10. Specifically, it is determined whether the temperature of the cooling water of the internal combustion engine 10 detected based on the output signal from the temperature sensor 98 is less than the first predetermined temperature.

If a cold start is determined (positive determination at Step S401), both of the first fuel addition valve 64 and second fuel addition valve 72 are actuated thereby to perform both of fuel addition via the first fuel addition valve 64 and fuel addition via the second fuel addition valve 72 (Step 5403). The actuation timing, that is, the fuel addition timing of the first fuel addition valve 64 is synchronized with the actuation timing, that is, the fuel addition timing of the second fuel addition valve 72. Specifically, as described above, those actuation timings are related in such a way that when exhaust gas that contains fuel added via the second fuel addition valve 72 reaches the outlet portion 68e of the chamber 68 or the neighborhood thereof, fluid that can contain fuel added via the first fuel addition valve 64 flows out of the chamber 68 to the exhaust passage 26 thereby to merge into the exhaust gas that contains fuel. Each of the actuation timing of the first fuel addition valve 64 and actuation timing of the second fuel addition valve 72 is found and set by retrieving previously-stored data on the basis of the engine rotation speed and engine load. Then, based on those set actuation timings, the controller 78 actuates the first fuel addition valve 64 and second fuel addition valve 72. Such actuation of the first and second fuel addition valves 64, 72 is performed until the temperature of the cooling water of the internal combustion engine 10 becomes greater or equal to the first predetermined temperature. By synchronizing the actuation timing of the first fuel addition valve 64 with the actuation timing of the second fuel addition valve 72, slipping of unburned fuel through the pro-oxidant member 62 can be suppressed thereby to properly prevent degradation of exhaust emission.

If it is determined not to be a cold start (negative determination at Step S401), it is determined whether heating of the exhaust purification member is necessary or not (Step S405), where it is determined whether the temperature of the exhaust purification member is less than the second predetermined temperature. Specifically, the third purification member 34 is subjected to determination as the exhaust purification member. That is because the third purification member 34 is a NOx purification catalyst and has a suitable temperature region in which the function to purify NOx is adequately exhibited. For example, this suitable temperature region is greater or equal to 200°C and less or equal to 400°C. Therefore, the second predetermined temperature is, for example, 200°C. However, temperatures of other purification members 30, 32 may be subjected to determination. The temperature of the exhaust purification member is estimated in such a way that, on the basis of the output signal from the temperature sensor 100, data that was previously set and stored based on the experiment is retrieved or the predetermined operation is performed. However, a temperature sensor may be provided directly in the exhaust purification member in order to detect the temperature of the exhaust purification member. The temperature of the exhaust purification member may be estimated in such a way that, on the basis of the engine rotation speed and the engine load, that is, the engine operation state, data that was previously set and stored based on the experiment is retrieved or the predetermined operation is performed. For example, any one of an accelerator opening, an intake pressure and an exhaust pressure, or a combination of a plurality of them can be employed as an engine load. For example, while fuel injection via the fuel injection valve 12 is stopped, that is, while fuel cut is performed, heating of the exhaust purification member can be necessary.

Also, when the cumulative operation time of the internal combustion engine 10 exceeds a predetermined amount of time, it can be determined that heating of the exhaust purification member, especially, the second purification member 32 is necessary, as described above. A pressure sensor to detect the differential pressure between before and after the second purification member 34 may be provided, and when the differential pressure becomes greater or equal to a predetermined pressure, it can be determined that heating of the exhaust purification member is necessary.

Then, if it is determined that heating of the exhaust purification member is necessary (positive determination at Step S405), only the first fuel addition valve 64 is actuated thereby to add fuel via the first fuel addition valve 64 without fuel addition via the second fuel addition valve 72 (Step S407). The actuation timing of the first fuel addition valve 64 is found and set in such a way that previously-stored data is retrieved based on the engine rotation speed and engine load. In this case, the actuation timing of the first fuel addition valve 64 may be fixed regardless of the engine operation state. Based on the set actuation timing, the controller 78 actuates the first fuel addition valve 64. Such actuation of the first fuel addition valve 64 continues when heating of the exhaust purification member is necessary.

Meanwhile, if it is determined not to be a cold start (negative determination at Step S401) and also if it is determined that heating of the exhaust purification member is not necessary (negative determination at Step S405), the first and second fuel addition valves 64, 72 are not actuated (Step S409). That is, the heating gas supply unit 60 does not feed the heating gas.

During a cold start, when the temperature of the cooling water of the internal combustion engine 10 is less than the aforementioned first predetermined temperature, only one of the first and second fuel addition valves 64, 72 may be actuated. For example, when the temperature of the cooling water of the internal combustion engine 10 is less than a third predetermined temperature that is less than the aforementioned first predetermined temperature, both of the first and second fuel addition valves 64, 72 are actuated, as described above. When the temperature of the cooling water of the internal combustion engine 10 is less than the first predetermined temperature and greater or equal to the third predetermined temperature, only one of the first fuel addition valve 64 and second fuel addition valve 72 can be actuated.

If it is determined that heating of the exhaust purification member is necessary (positive determination at Step S405), only the second fuel addition valve 72 may be actuated thereby to add fuel via the second fuel addition valve 72 without fuel addition via the first fuel addition valve 64. Alternatively, as with the case where it is determined that heating of the exhaust purification member is necessary (positive determination at Step S405) and the case where it is determined to be a cold start (positive determination at Step S401), both of the first fuel addition valve 64 and second fuel addition valve 72 may be actuated.

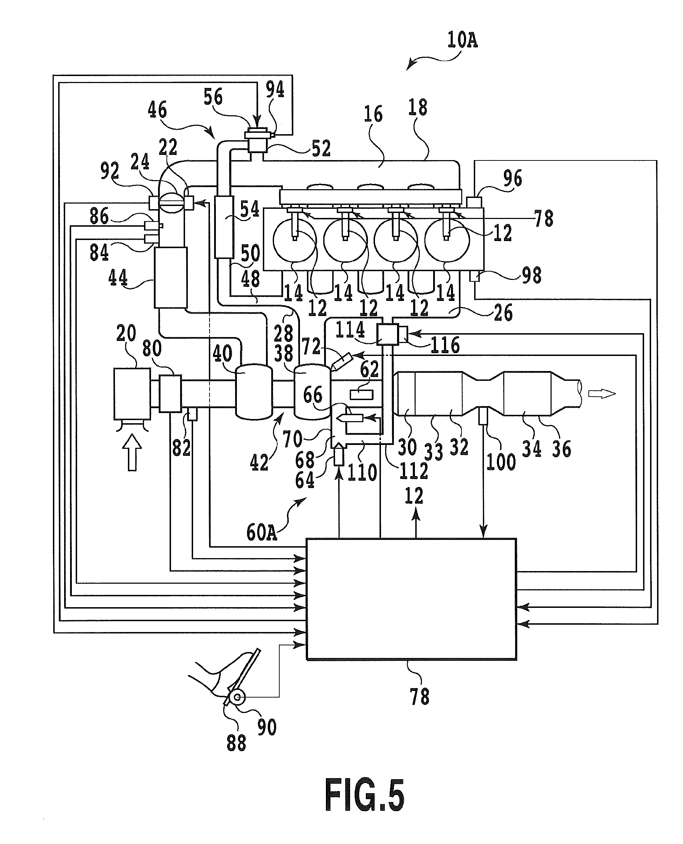

Next, a second embodiment of the present invention will be described. Fig. 5 is a schematic diagram of an internal combustion engine system of a vehicle to which an exhaust purification device of the second embodiment is applied. The heating gas supply unit 60A of an internal combustion engine 10A is different from the heating gas supply unit 60 of the internal combustion engine 10 in that the former includes a configuration to direct exhaust gas upstream of the turbine 38 to the chamber 68. However, other configuration is basically the same as that of the first embodiment. Therefore, differences and related matters thereof will be described below. Components identical or corresponding to components described above have the same reference numbers, and overlapping of description thereof will be avoided.

The heating gas supply unit 60A provided in the internal combustion engine 10A shown in Fig. 5 includes a communication passage 110 that connects the chamber 68 and the exhaust passage upstream of turbine 38. The communication passage 110 is defined by a communication pipe 112. One end of the communication pipe 112 is connected to the exhaust manifold 28, and the other end of the communication pipe 112 is connected to the chamber forming member 70. Especially, the other end of the communication pipe 112 is located upstream of the glow plug 66 and in the neighborhood of the first fuel addition valve 64, relative to the chamber forming member 70. A control valve 114 is provided so as to adjust the communication state of the communication passage 110, and the opening of the control valve 114 is controlled by an actuator 116. The controller 78 has the function of a control valve control means to control actuation of the control valve 114.

Actuation of the first fuel addition valve 64 and second fuel addition valve 72 of the heating gas supply unit 60A are controlled as described in the first embodiment, which therefore will not be described. However, when both of the first fuel addition valve 64 and second fuel addition valve 72 are actuated (Step S403), actuation timings thereof are corrected according to control of an opening of the control valve 114. When the first fuel addition valve 64 is actuated, the glow plug 66 is actuated.

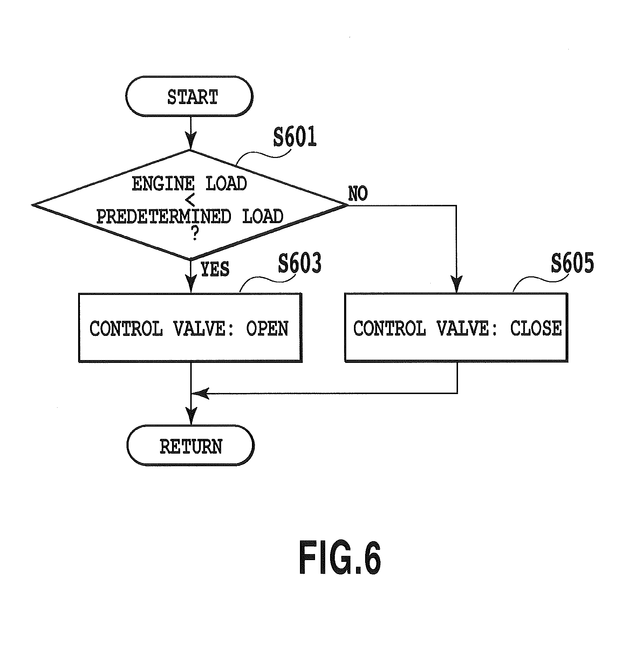

First, control of the control valve 114 will be described. The control valve 114 is basically maintained to be in a close state. When the first fuel addition valve 64 is actuated, the control valve 114 can be opened. When the first fuel addition valve 64 is actuated (Step 403 or Step S407), the control valve 114 is opened or closed according to the engine load (see Fig. 6).

When the first fuel addition valve 64 is actuated (Step 403 or Step S407), it is determined whether the engine load is less than a predetermined load (Step S601). This determination corresponds to whether the engine load is a light load or not. If the engine load is less than a predetermined load (positive determination at Step S601), the control valve 114 is opened (Step S603). Meanwhile, when the engine load is not less than a predetermined load (negative determination at Step S601), the control valve 114 is closed (Step S605).

When the first fuel addition valve 64 is actuated and the control valve 114 is opened, exhaust gas is directed via the communication passage 110 into the chamber 68. A flow of this directed exhaust gas can cause fluid in the chamber 68 to be pushed out to the exhaust passage 26 more forcefully. At this time, fuel added via the first fuel addition valve 64 mixes with exhaust gas in the chamber 68, and generated mixed air flows out of the chamber 68 via the glow plug 66. Accordingly, fuel supplied via the first fuel addition valve 64 can be more adequately burned.

Since exhaust gas directed via the communication passage 110 did not pass through the turbine 38, the exhaust gas has a higher temperature than that of exhaust gas that passed through the turbine 38. Accordingly, in the case where exhaust gas is directed via the communication passage 110 into the chamber 68, the temperature of fluid directed from the chamber 68 to the exhaust passage 26 has a higher temperature, compared with the case where exhaust gas is not directed via the communication passage 110. Accordingly, ignition performance of fuel added via the first fuel addition valve 64 and fuel added via the second fuel addition valve 72 can be properly improved. Therefore, the heating gas supply unit 60A can more adequately supply heating gas to the exhaust purification member, thereby facilitating warm-up or heating of the exhaust purification member. During an engine start, since the engine load is light, the control valve 114 can be opened. Therefore, during a cold start, the exhaust purification member can be heated more adequately.

When exhaust gas is directed through the communication passage 110 into the chamber 68 in this way, the outlet velocity of fluid in the chamber 68 can be faster, compared with the case where the control valve 114 is closed. Therefore, if both of the first fuel addition valve 64 and second fuel addition valve 72 are actuated, actuation timings thereof are corrected based on data previously set from an experiment or the like so that the actuation timings are more suitably synchronized. In correcting, an engine load is preferably considered. Such correction may not be performed.

Meanwhile, when the first fuel addition valve 64 is actuated, even if the control valve 114 is closed, the heating gas supply unit 60A, as with the aforementioned heating gas supply unit 60, adequately can supply heating gas to the exhaust purification member. The reason why the control valve 114 is closed when the engine load is not less than a predetermined load is to increase the effect of the supercharge of the turbocharger 42 when the engine load is not less than a predetermined load.

The aforementioned two embodiments have been described with respect to a case where the present invention is applied to a diesel engine. However, the present invention is not limited to this, and can be applied to various internal combustion engines such as a port-injection-type gasoline engine and a cylinder-injection-type gasoline engine. The fuel to be used is not limited to diesel oil or gasoline, but may be alcohol fuel, liquefied natural gas (LPG) or the like. Any number of cylinders of an internal combustion engine to which the present invention is applied may be employed.

The number, type, configuration and arrangement order of exhaust purification members provided in the exhaust passage are not limited to the above embodiments. For example, the number of exhaust purification members may be, one, two or four. For example, an exhaust purification member such as an oxidation catalyst may be further provided downstream of the above third purification member. As an exhaust purification member, well-known various catalysts, filters or the like can be used. The above pro-oxidant member 62 may not be an oxidation catalyst having the above configuration, and can be a catalyst having another oxidative function.

In the above two embodiments and modifications thereof, the present invention has been described specifically to some extent, but the present invention is not limited to these. It should be appreciated that the present invention can be changed or modified without departing from the spirit and scope of the inventions set forth in the claims. That is, the present invention includes every variation, application and equivalent encompassed in ideas of the present inventions specified in the claims.

## Claims

1. An exhaust purification device for an internal combustion engine comprising an exhaust purification member in an exhaust passage downstream of a turbine of a turbocharger, the exhaust purification device comprising:
a heating gas supply unit to supply heating gas to the exhaust purification member, the heating gas supply unit comprising a catalyst that is provided in the exhaust passage between the turbine and the exhaust purification member and has an oxidative function, a fuel addition means located upstream of the catalyst, and a heating means located upstream of the catalyst;
wherein the fuel addition means and heating means are provided in a chamber that communicates with the exhaust passage between the turbine and the catalyst.

2. The exhaust purification device for the internal combustion engine according to claim 1, wherein the chamber is provided relative to the exhaust passage in such a way that the axis of the chamber is angled at a 30-degree or less angle relative to a plane orthogonal to the axis of the exhaust passage.

3. The exhaust purification device for the internal combustion engine according to claim 1 or 2, wherein the chamber is located relative to the exhaust passage in such a way that fluid in the chamber flows along a swirling flow of exhaust gas that flew out of the turbine, into the exhaust passage.

4. The exhaust purification device for the internal combustion engine according to any of claims 1 to 3, further comprising a passage connecting the chamber and an exhaust passage upstream of the turbine.

5. The exhaust purification device for the internal combustion engine according to any of claims 1 to 4, further comprising a second fuel addition means in the turbine or an exhaust passage upstream of the turbine.

6. The exhaust purification device for the internal combustion engine according to claim 5, wherein a controller to control actuation of the fuel addition means and actuation of the second fuel addition means synchronizes the actuation timing of the fuel addition means and an actuation timing of the second fuel addition means so that exhaust gas containing fuel added via the second fuel addition means and fluid in the chamber merge into each other in the exhaust passage between the turbine and the catalyst.
